# EUROPÄISCHE PATENTSCHRIFT

(11) **EP 1 256 767 B1**
(45) Veröffentlichungstag und Bekanntmachung des Hinweises auf die Patenterteilung: **18.10.2006**
(21) Anmeldenummer: 02005686.7
(22) Anmeldetag: 13.03.2002
(51) Int. Cl.: F24J 2/04, E04F 13/02, F24D 3/16

(54) **Fassaden-Thermoplatte**
Thermal plate for building wall
Plaque thermique pour façade

(30) Priorität: 12.05.2001 DE 10123087
(43) Veröffentlichungstag der Anmeldung: 13.11.2002
(73) Patentinhaber: Wedi, Stephan, 48282 Emsdetten (DE)
(72) Erfinder: Wedi, Stephan, 48282 Emsdetten (DE)
(74) Vertreter: Hoffmeister, Helmut

(56) Entgegenhaltungen:
- EP-A- 0 590 625
- DE-A- 3 039 107
- DE-A- 3 435 613
- DE-A- 3 912 095
- FR-A- 2 438 129

## Beschreibung

Die Erfindung betrifft eine Vorrichtung zur Fassadenverkleidung von Gebäuden, gemäß dem Oberbegriff des Anspruchs 1.

Eine Vorrichtung der eingangs genannten Art ist aus der DE 30 39 107 A1 bekannt.

Eine ähnliche Vorrichtung zeigt die DE 34 35 613 A1.
Auf ein Mauerwerk einer Gebäudeaußenwand wird eine Fassadenverkleidung aus Isolierplatten aufgebracht. An der außenseitigen Oberfläche der Isolierplatten sind Nuten eingebracht, in die Rohre eingelegt sind, die von einem Heizmedium durchströmt werden und auf die Verputzschichten aufgebracht sind. Zwischen den Verputzschichten und der Isolierplatte soll ein Wärmestau entstehen, der zu Heizzwecken abgeführt werden kann.

Nachteilig ist, daß die Wärmedämmung eine solche Aufheizung selbst wegdämmt. Untersuchungen haben ergeben, daß die Wärmedämmung gegenüber ungedämmten Außenwänden keine wirksame Energieeinsparung ergibt.

Aus der DE 197 26 646 C2 ist ein Heiz- und Kühlelement zum Einlegen in Deckenpaneele bekannt. Es weist eine Basisplatte auf, auf der ein Rohrsystem angeordnet ist. Die Basisplatte ist selbsttragend ausgebildet. Das Rohrsystem ist ein Kapillarrohrsystem, das Kapillarrohre aufweist, die mit Sammelrohren verbunden sind.

Aus der DE 197 20 863 C2 ist es bekannt, dieses Heiz- und Kühlelement für Decken, Wände und Fußböden vorzusehen. Hierbei wird auf eine Basisplatte eine Deckplatte mit parallelen Längsnuten angeordnet. In die Längsnuten sind Kapillarrohre einer Kunststoffrohrmatte eingelegt. Die Deckplatte besitzt Quernuten, die dem Längenausgleich der Kapillarrohre dienen. Die Basisplatte ist als Gips-, Metall-, Kunststoff- oder Holzplatte ausgeführt. Die Deckplatte besteht aus einem Dämm-Material.

Nachteilig ist, daß das bekannte Heiz- und Kühlelement Träger- und Dämmplatte trennt und dadurch zu schwer und ist. Außerdem ist das Element nur für Innenräume vorgesehen.

Es stellt sich deshalb die Aufgabe, eine Vorrichtung zur Fassadenverkleidung von Gebäuden der eingangs genannten Art so weiter zu entwickeln, daß die Wärmedämmung eine Aufheizung nicht selbst wegdämmt.

Erfindungsgemäß wird diese Aufgabe durch die Merkmale des kennzeichnenden Teils des Anspruchs 1 gelöst.

Die mit der Erfindung erzielten Vorteile bestehen insbesondere darin, daß die gewonnenen positiven bzw. negativen Wärmeenergien um die Dämmung herum direkt auf das Gemäuer der Wand geleitet werden. Das Gemäuer kann dabei in unterschiedlicher Art und Weise ausgeführt werden. Durch die Umleitung der Energie ist es möglich, das Gebäude im Winter von außen vollflächig aufzuheizen und im Sommer vollflächig zu kühlen.

Hierbei wird im Winter die gewonnene Wärmeenergie direkt auf das Mauerwerk geleitet. Die Wärmeenergie gestattet eine Erwärmung des Gebäudes von außen. Zusätzlich wird gedämmt , indem die Transmissionswärmeverluste nach außen hin verhindert werden.

Das führt zu sehr wirksamen Energieeinsparungen während der Winterheizperiode. Im Sommer hingegen können die Temperaturen der im Schatten liegenden Wände des Gebäudes auf das gesamte Gebäude, insbesondere auf die von der Sonne angestrahlten Wände übertragen werden. Verfügt das Gebäude über eine Klimaanlage, wird die Klimaanlage im Sommer wirksam entlastet, was zu wesentlichen Energieeinsparungen führt.

Die äußere armierte erste Mörtelschicht erlaubt es, eine Außenbeschichtung aufzubringen. Hierbei ist es möglich, die zweite armierte Mörtelschicht mit dem Mauerwerk des Gebäudes zu verbinden. Das ist möglich, weil Trage- und Isolier-Platte zusammenfallen.

Die Isolierplatte kann eine Kunststoffhartschaumplatte sein. Die Kunststoffhartschaumplatte ist leicht und verfügt über hohe Isoliereigenschaften.

Als erste und zweite Nuten können beabstandet untereinander verlaufende Kapillargräben verwendet werden, an deren gegenüberliegenden Enden querverlaufende Sammelgräben angeordnet sind. Das Einbringen der Gräben wird durch den relativ weichen Kunststoffhartschaum erleichtert. Der weiche Kunststoffhartschaum gestattet es darüber hinaus, die Leitungen sicher in den Gräben festgeklemmt zu halten.

Die ersten und zweiten Leitungen können Kapillarleitungen sein, die an den gegenüberliegenden Enden jeweils durch eine Sammelleitung verbunden sein können. Die Sammelleitungen können dabei miteinander verbunden werden. Es ist möglich, die Sammelleitungen darüber hinaus auf Sammelschienenleitungen zu führen, und durch in den Sammelschienenleitungen angeordnete Ventile zu verbinden. Hierdurch ist es möglich, die gespeicherten Energien auf die jeweiligen Flächen umzuleiten, wo sie benötigt werden. Es ist auch möglich, die gespeicherten Energien für Temperaturregelungsvorgänge im Inneren des Gebäudes einzusetzen. Auch ist es möglich, gespeicherte Energien für die Warmwasserversorgung des Gebäudes einzusetzen.

Die Ventile können steuerbar sein. Sie können mit einer Steuereinheit verbunden werden. Die Steuereinheit kann nach einem Programmablaufplan die einzelnen Ventile so ansteuern, daß sie zu den gewünschten Effekten im Inneren des Gebäudes führen.

Die Außenbeschichtung kann unterschiedlich ausgebildet werden. Die Außenbeschichtung kann ein Außenputz, eine Verklinkerung, ein Schieferbelag oder dgl. sein. Die Außenbeschichtung wird in der Regel durch baurechtliche Vorschriften am jeweiligen Standort des Gebäudes geregelt. Die Außenbeschichtung kann auch aus Brettern oder dgl. bestehen.

Ein Ausführungsbeispiel der Erfindung ist in der Zeichnung dargestellt und wird im folgenden näher beschrieben.

Es zeigen
Fig. 1 ein Gebäude mit Thermobauplatten in einer schematischen perspektivischen Darstellung,
Fig. 2 eine Thermobauplatte gemäß Fig. 1 in einer schematischen perspektischen Darstellung,
Fig. 3 einen Schnitt durch eine Thermobauplatte gemäß Fig. 2 entlang der Linie III - III,
Fig. 4 einen Schnitt durch eine Thermobauplatte gemäß Fig. 2 entlang der Linie IV - IV,
Fig. 5 ein von der Sonne angestrahltes Gebäude gemäß Fig. 1 mit einer zugeordneten Steuereinheit,
Fig. 6 einen Teilschnitt durch eine Wand eines Gebäudes gemäß Fig. 1 und 5,
Fig. 7 zu einem Blockschema zusammengeschaltete Thermobauplatten und
Fig. 8 eine Entwicklung der Jahresmitteltemperatur der Station Hohenpeißenberg von 1781 bis 1990.

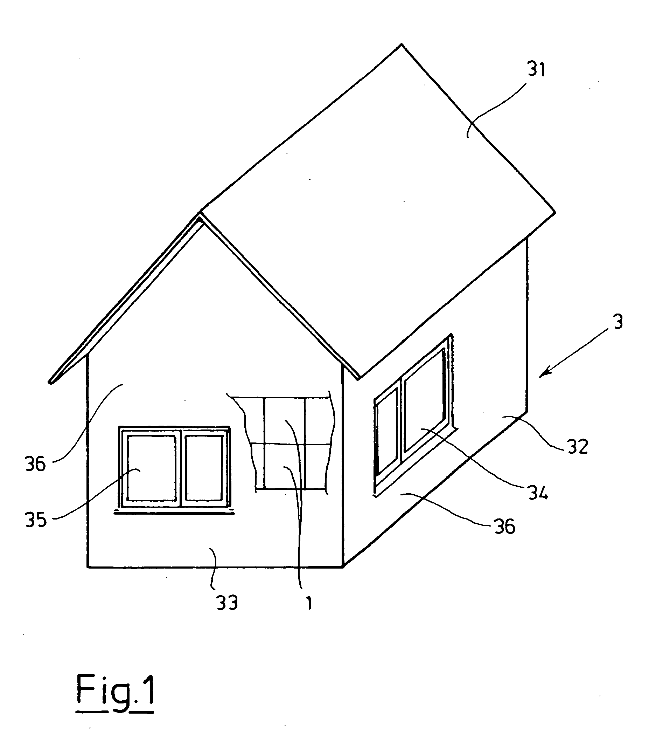

In Fig. 1 ist ein Gebäude 3 gezeigt, es besteht aus Gebäudewänden 32, 33, in das Fensterelemente 34, 35 eingesetzt sind. Das Gebäude 3 schließt mit einem Dachelement 31 ab.

Die Gebäudewände 32, 33 sind nach außen hin mit einer Außenbeschichtung versehen, die als Außenputz 36 ausgebildet ist. Unterhalb des Außenputz sind die Gebäudeseitenwände 32 und Gebäudegiebelwände 33 mit Thermobauplatten 1 abgedeckt.

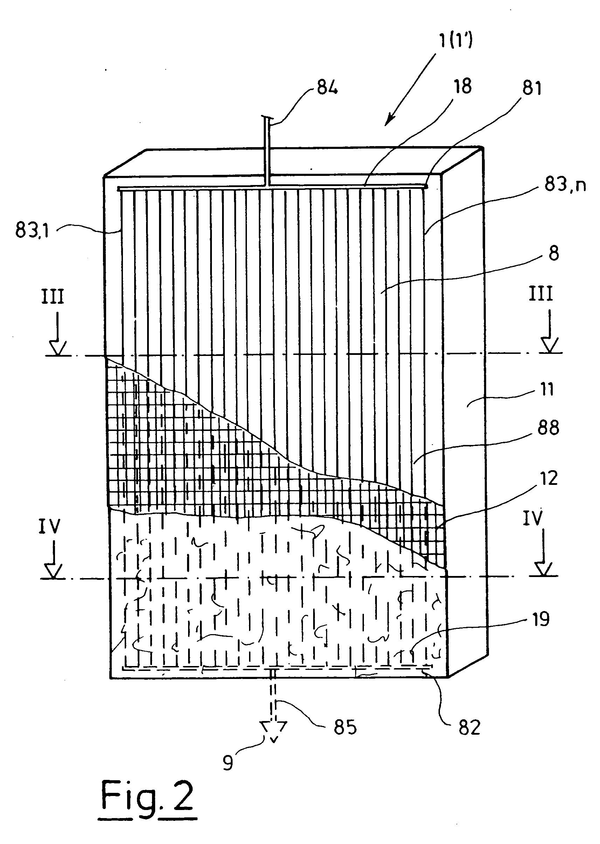

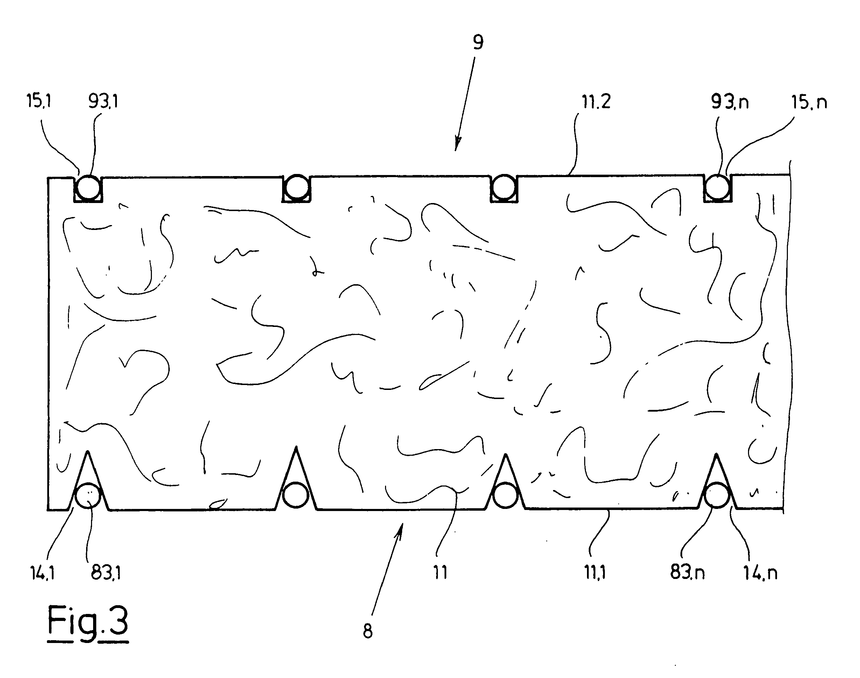

Eine Thermobauplatte 1 ist in den Fig. 1 bis 4 gezeigt.

Die Thermobauplatte 1 weist als Kern eine Kunststoffhartschaumplatte 11 auf. In die gegenüberliegenden Flachseiten 11.1, 11.2 sind beabstandet untereinander Kapillargräben 14.1,..., 14.n bzw. 15.1,..., 15.n eingebracht. An den Enden der Kapillargräben verlaufen parallel gegenüberliegend Sammelleitungsgräben 18, 19.

Sowohl die Kapillargräben als auch die Sammelleitungsgräben können eine rechteckige oder eine im Querschnitt dreieckförmige Konfiguration haben. Der relativ weiche Kunststoffhartschaum erlaubt es, die Gräben 14.1,..., 14.n., 15.1,..., 15.N bzw. 18 und 19 leicht in die Flachseiten 11.1, 11.2, einzubringen.

In die Kapillargräben 14.1, ..., 14.n sind Kapillarleitungen 83.1,...,83.n eingelegt. Die Kapillarleitungen 83.1,..., 83.n sind an ihren gegenüberliegenden Enden jeweils durch eine Sammelleitung 81, 82 miteinander verbunden.

Auf der gegenüberliegenden Flachseite 11.2 sind Kapillarleitungen 93.1,..., 93.n eingebracht, deren Enden ebenfalls durch Sammelleitungen verbunden sind.

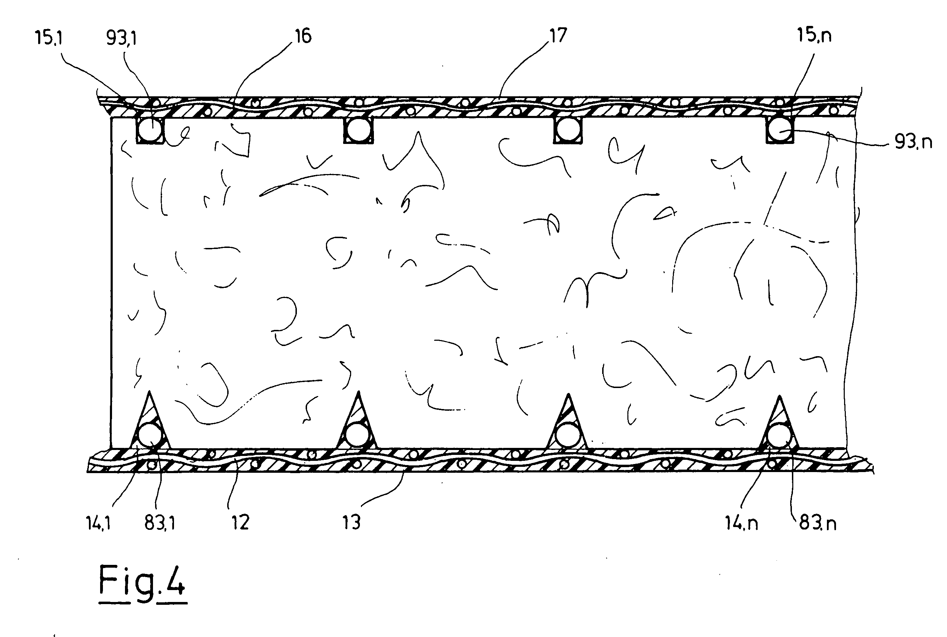

Sind die Kapillarleitungen und die Anschlußleitungen in die Kapillargräben 14.1,...,14.n, 15.1,..., 15.n und die Sammelleitungen in die Sammelleitungsgräben eingelegt, wird auf die Flachseite 11.1 eine dünnflüssige Mörtelschicht 13 aufgebracht (vgl. insbesondere Fig.4). In die dünnflüssige Mörtelschicht 13 wird eine Armierungsschicht eingelegt, die als Glasfasergewebe 12 ausgebildet ist. Danach wird überschüssiger Mörtel abgestrichen, so daß das Glasfasergewebe an der Oberfläche der Mörtelschicht eingebettet liegt. Die so beschichtete Platte wird in einen Trockenofen gegeben und die Schicht härtet zu einer armierten Mörtelschicht aus.

Danach wird die einseitig beschichtete Platte umgedreht und die gegenüberliegende Flachseite 11.2 mit einer Mörtelschicht 17 versehen, in die ein Glasfasergewebe 16 eingebettet wird. Auch hier wird überschüssiger Mörtel abgestrichen und die Platte in einen Trockenofen geschoben, so daß eine ausgehärtete Mörtelschicht entsteht, in die das Glasfasergewebe 16 eingebettet ist.

Von besonderem Vorteil ist, daß für die Herstellung der Thermobauplatte das Beschichtungsverfahren angewendet werden kann, wie es aus der DE 42 34 269 C1 bekannt ist. Ein weiterer Vorteil besteht darin, daß die gleichen Beschichtungseinrichtungen und Materialien zum Einsatz kommen können, so daß keine Zusatzinvestitionen notwendig sind.

Die hergestellte Thermobauplatte ähnelt in ihren Festigkeitseigenschaften der nach der DE 42 34 269 C1 hergestellten Bauplatte, die über wärmedämmende Eigenschaften und sehr stabile Trageigenschaften verfügt. Hierdurch wird erreicht, daß bei der Thermobauplatte 1 tragende und isolierende Eigenschaften zusammen fallen, so daß die Thermobauplatte bei sehr geringen Dickenabmessungen sehr wirksame Dämmungseigenschaften hat und wirksame Energieeinsparungsmöglichkeiten bietet.

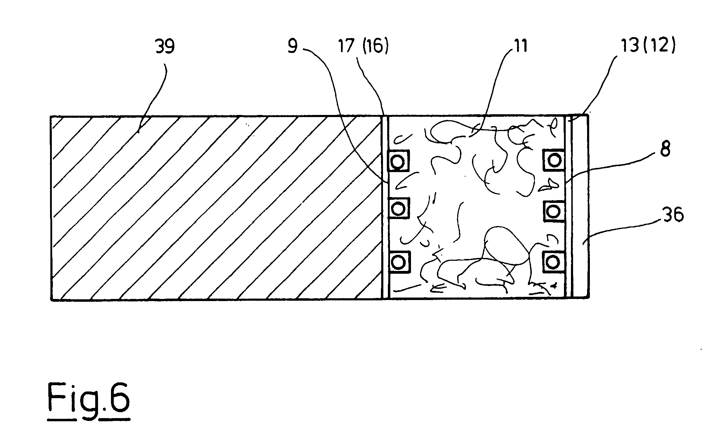

Fig. 6 zeigt, daß auf ein Mauerwerk 39 des Gebäudes 3 direkt die Thermobauplatte 1 aufgelegt werden kann. Durch entsprechende Klebe- bzw. Dübeleinrichtungen oder andere Hilfskonstruktionen können die Thermobauplatten an dem Mauerwerk 39 gehalten werden. Auf die dem Mauerwerk gegenüberliegende Seite der Thermobauplatte 1 wird dann der erwähnte Außenputz aufgebracht. Die rauhe Oberfläche der Außenbeschichtung der Thermobauplatte gibt dem Außenputz eine wirksame Haftungsgrundlage.

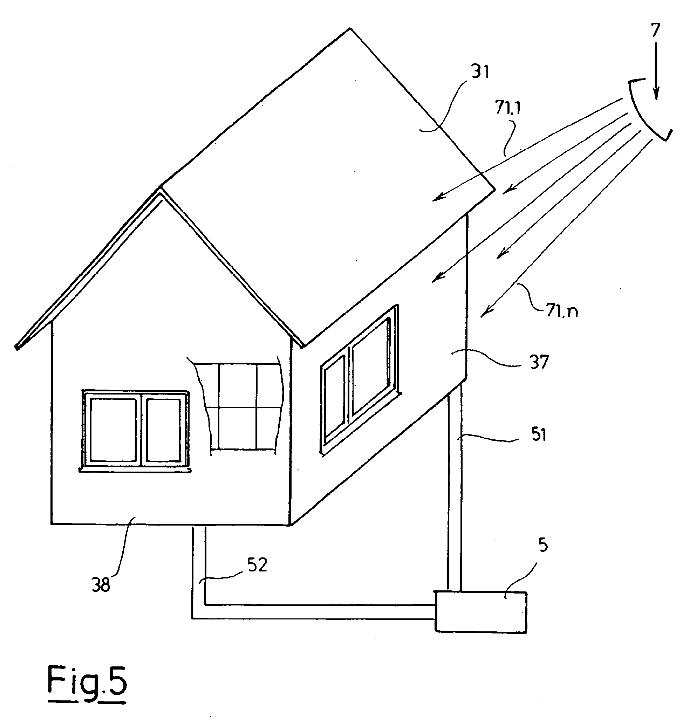

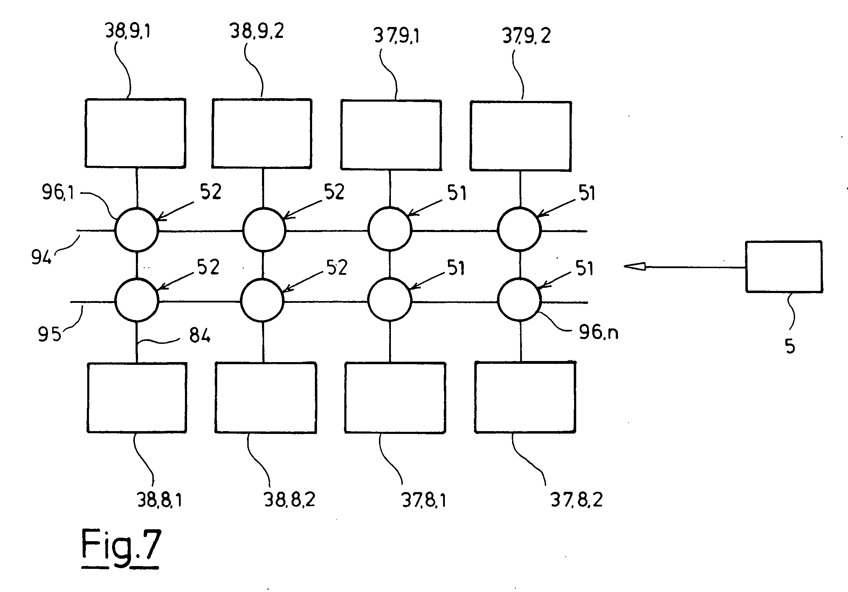

Fig. 5 und 7 zeigen, wie die einzelnen Kapillarsysteme auf der Vorder- und Rückseite der Thermobauplatten 1, die auf dem Mauerwerk 39 der Gebäudeseitenwände 32 unter Gebäudegiebelwände 33 verlegt sind, zusammengeschaltet werden können. Und zwar können Anschlußleitungen 84, 85, die mit den Sammelleitungen 81, 82 verbunden sind, mit steuerbaren Ventilen 96.1,..., 96.n verbunden werden. Die Ventile sind in Sammelschienenleitungen 94, 95 angeordnet und über Steuerleitungen 51, 52 mit einer Steuereinheit 5 verbunden.

Die Herstellung und die Wirkungsweise einer Fassadenplatte mit Thermobauplatten, wie sie sich aus dem dargestellten Ausführungsbeispiel ergibt, sei unter Zurhilfenahme der Figuren 1 bis 8 erläutert.

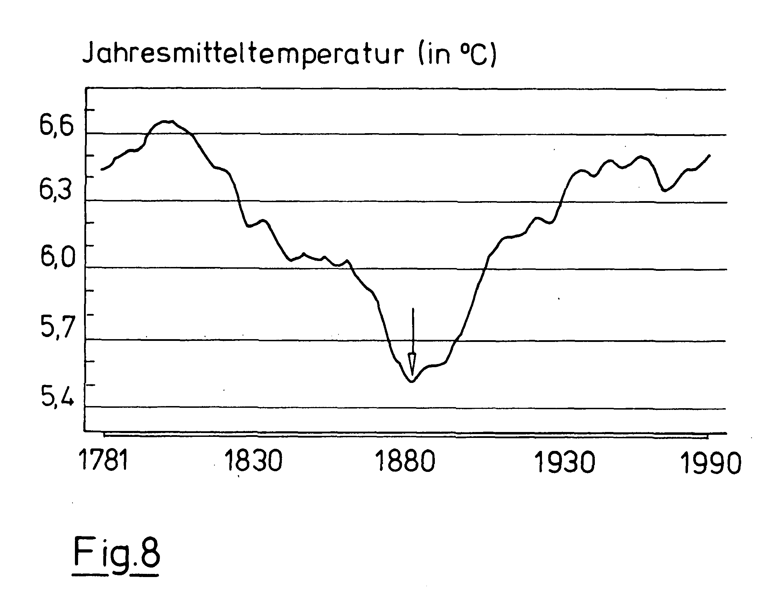

Fig. 8 zeigt die Entwicklung der Jahresmitteltemperatur der Station Hohenpeißenberg von 1881 bis 1990. Die Tabelle zeigt, daß die Jahresmitteltemperatur bereits einen ersten Höhepunkt beim Wechsel vom 18. ins 19. Jahrhundert hatte. Hier wurden bereits Jahresmitteltemperaturen von plus 6,6 °C gemessen. Danach sankt die Jahresmitteltemperatur kontinuierlich ab und hatte ihr absolutes Minimum etwa im Jahre 1880. Danach begann sie wieder kontinuierlich anzusteigen, und erreichte 1990 etwa einen Wert von etwa plus 6,4 °C. Diese Entwicklung setzt sich bis zum heutigen Tage fort, wobei der Wert von 1781 bald erreicht sein wird.

Unabhängig von der laufenden Klimadebatte gilt es, die positive Seite der zunehmenden Jahresmitteltemperatur für die Beheizung von Gebäuden auszunutzen.

Aus diesem Grunde wird das Mauerwerk 39 des Gebäudes 3 vor dem endgültigen äußeren Außenputz mit Thermobauplatten 1 belegt. Die armierte Mörtelschicht auf beiden Seiten der Thermobauplatten erleichtert wesentlich deren Verlegung.

Sind die Thermobauplatten verlegt, werden sie anschließend zu dem Blocksystem verschaltet, wie es in Fig. 7 gezeigt ist. Danach wird der Außenputz 36 aufgebracht und das Gebäude 3 hat ein einheitliches Aussehen.

In Fig. 7 ist das Gebäude 3 während der Tagzeit dargestellt. Hierbei treffen die Sonnenstrahlen 71,...,71.n der Sonne 7 auf die Gebäudeseitenwand 32, die zur Sonnenseite 37 hinzeigt. Die Gebäudegiebelwand 33 hingegen liegt zur Schattenseite 38.

Die Sonnenstrahlen 71.1..., 71.n erwärmen ein Wäremaustauschelement 88, das ein speziell aufbereitetes Wasser sein kann, in den Kapillarleitungen 83.1,...,83.n der nach außen hinzeigenden Flachseite 11.1 der Thermoplatte 1. Dadurch, daß die Kapillarleitungen unmittelbar unter der Plattenbeschichtung und dem Putz liegen, werden sie schnellstens erwärmt. Der geringe Durchmesser der Kapillarleitungen gewährleistet, daß das Wärmeaustauschmedium sofort die Energie der Sonnenstrahlen in sich aufnimmt und sich erwärmt.

Die Steuereinheit 5 sorgt dafür, daß die gewonnene Wärmeenergie allseitig auf die gegenüberliegende Seite der anderen Thermobauplatten gelenkt wird, die auf dem Mauerwerk 39 des Gebäudes 3 aufliegen. Hierdurch wird erreicht, daß das Gebäude 3 im Winter allseitig zusätzlich zur Innenheizung aufgeheizt wird. Ist es erforderlich, daß bestimmte Räume des Gebäudes kühl bleiben sollen, werden sie von der allgemeinen Außenerwärmung ausgeklammert.

Es wird eingeschätzt, daß die Sonne 7 bei senkrecht einfallenden Strahlen auf einem Quadratmeter in jeder Sekunde 0,32 kcal abgibt. Bei einem durchschnittlichen Minderungsmittelwert von 0,5 wären das immerhin 0,16 kcal pro Sekunde und Quadratmeter. Bei einer Sonneneinstrahlung von 2,78 Stunden ergeben sich damit 1.600 kcal/m²' was etwa 1,85 KW-Stunden/m² entspricht. Die äußere Aufheizung des Gebäudes 3 ermöglicht es, wirksam Heizungsenergie einzusparen. Durch die Thermobauplatten wird erreicht, daß die Wärmestrahlung der Sonne in den Heizkreislauf des Gebäudes mit eingebunden wird.

Im Sommer kann die gewonnene Energie zur Erwärmung von Brauchwasser genutzt werden.

Ein weiterer sehr wesentlicher Vorteil besteht darüber hinaus darin, daß die Temperaturen des Wärmeaustauschmediums 88, das auf der Schattenseite 38 liegt, allseitig für die Wände des Gebäudes 3 genutzt werden kann. Hierdurch wird eine sehr wirksame Kühlung der Wände erreicht. Eine Klimaanlage im Inneren des Gebäudes 3 wird hierdurch entlastet und Energie zum Betreiben der Klimaanlage gespart.

Die für den Außenbereich konzipierte Thermobauplatte in deren Kern aus XPS, EPS, Glaswolle oder Mineral-Faser mit einer Stärke von 2 bis 16 cm beidseitig Nuten eingefräst sind, können die Kapillarrohrnetze leicht und dauerhaft eingelegt werden. Der eingesetzte Beschichtungsmörtel sichert, daß die Kapillarleitungen in den Mörtel eingebettet werden, wodurch gleichzeitig ein stabiles, leicht handhabbares Element erreicht wird. Der Beschichtungsmörtel sorgt darüber hinaus für eine gute Wärmeleitung zu den Kapillarleitungen.

Der Umwelt wird auf diesem Wege durch den Einsatz der Thermobauplatten einfach die vorhandene Wärme entzogen. Es wird Energie eingespart. Eine aus zusätzlicher Verbrennung resultierende CO₂-Entwicklung wird wirksam vermieden und damit einer Aufheizung der Atmosphäre entgegengewirkt.

## Patentansprüche

1. Vorrichtung zur Fassadenverkleidung von Gebäuden, bestehend aus
- wenigstens einer Isolierplatte (11), die auf wenigstens einer Flachseite (11.1, 11.2) Nuten (14.1, ..., 14.n, 15.1, ..., 15.n, 18, 19) aufweist, in die Leitungen (81, 82, 83.1, ..., 83.n, 84, 85, 93.1, ..., 93.n) eingelegt sind, die von einem **flüssigen** Wärmeaustauschmedium (88) durchströmt sind, und
- einer Abschlußbeschichtung, (12, 13, 16, 17, 36)
wobei
- in eine erste Flachseite (11.1) der Isolierplatte (11) erste Nuten (14.1, ..., 14.n, 18, 19) eingebracht sind, in die erste Leitungen (81, 82, 83.1, ..., 83.n, 84, 85) eingelegt sind und in eine zweite Flachseite (11.2), der ersten gegenüberliegend, zweite Nuten (15.1, ..., 15.n) eingebracht sind,
- die Abschlußbeschichtung eine erste armierte Mörtelschicht (12, 13) aufweist, die auf der ersten Flachseite (11.1) der Isolierplatte (11) angeordnet ist, und
- wenigstens die ersten und die zweiten Leitungen (81, 82, 83.1, ..., 83.n, 84, 85, 93.1, ..., 93.n) wenigstens teilweise miteinander zu verbinden sind,
**dadurch gekennzeichnet, daß** zweite Leitungen (93.1, ..., 93.n, 84) in die zweiten Nuten eingelegt sind, und daß die Abschlußbeschichtung eine zweite armierte Mörtelschicht (16, 17) aufweist, die auf der zweiten Flachseite (11.2) angeordnet ist.

2. Vorrichtung nach Anspruch 1, **dadurch gekennzeichnet, daß** auf der ersten armierten Mörtelschicht (12, 13) eine Außenbeschichtung (36) und die zweite armierte Mörtelschicht (16, 17) auf einem Mauerwerk des (39) des Gebäudes (3) angeordnet sein kann.

3. Vorrichtung nach Anspruch 1 oder 2, **dadurch gekennzeichnet, daß** Isolierplatte (11) 2 bis 16 cm dick ist.

4. Vorrichtung nach Anspruch 1, 2 oder 3, **dadurch gekennzeichnet, daß** Isolierplatte eine Kunststoffhartschaumplatte (11) ist.

5. Vorrichtung nach einem der vorhergehenden Ansprüche, **dadurch gekennzeichnet, daß** die ersten und zweiten Nuten beabstandet untereinander längsverlaufende Kapillargräben (14.1, ..., 14.n, 15.1, ...15.n) sind, an deren gegenüberliegenden Enden jeweils ein querverlaufender Sammelgraben (18, 19) angeordnet ist.

6. Vorrichtung nach einem der vorhergehenden Ansprüche, **dadurch gekennzeichnet, daß** ersten und zweiten Leitungen Kapillarleitungen (83.1, ..., 83.n, 93.1, ..., 93.n) sind, die an ihren gegenüberliegenden Enden jeweils durch eine Sammelleitung (81, 82) verbunden sind.

7. Vorrichtung nach einem der vorhergehenden Ansprüche, **dadurch gekennzeichnet, daß** die Sammelleitungen (83, 84) miteinander zu verbinden sind.

8. Vorrichtung nach einem der vorhergehenden Ansprüche, **dadurch gekennzeichnet, daß** die Sammelleitungen (83, 84) über Sammelschienenleitungen (94, 95) durch in diesen angeordnete Ventile (96.1, ..., 96.n) zu verbinden sind.

9. Vorrichtung nach Anspruch 7, **dadurch gekennzeichnet, daß** die Ventile (96.1, ..., 96.n) ansteuerbar und mit einer Steuereinheit (5) verbunden sind.

10. Vorrichtung nach einem der vorhergehenden Ansprüche, **dadurch gekennzeichnet, daß** die ansteuerbaren Sammelschienenleitungen (94, 95) mit einer Gebäude- Wärmeversorgungsanlage verbunden sind.

11. Vorrichtung nach einem der vorhergehenden Ansprüche, **dadurch gekennzeichnet, daß** die Außenbeschichtung ein Außenputz (36), eine Verklinkerung oder ein Schieferbelag ist.

## Claims

1. Device for façade cladding of buildings, comprising
- at least one insulating panel (11) which comprises, on at least one flat side (11.1. 11.2), grooves (14.1, ..., 14.n, 15.1, ..., 15.n, 18, 19), into which pipelines (81, 82, 83.1, ..., 83.n, 84, 85, 93.1, ..., 93.n) are inserted, through which a liquid heat exchange medium (88) flows and
- a final coating (12, 13, 16, 17, 36),
whereby
- first grooves (14.1, ..., 14.n, 18, 19) are arranged in a first flat side (11.1) of the insulating panel (11), into which first pipelines (81, 82, 83.1, ... 83.n, 84, 85) are inserted and second grooves (15.1, ..., 15.n) lying opposite the first are arranged in a second flat side (11.2),
- the final coating comprises a first reinforced mortar layer (12, 13) which is arranged on the first flat side (11.1) of the insulating panel (11), and
- at least the first and the second pipelines (81, 82, 83.1, ..., 83.n, 84, 85, 93.1, ... , 93.n) are to be at least partially connected to each other,
**characterised in that** second pipelines (93.1, ..., 93.n, 84) are inserted into the second grooves and **in that** the final coating comprises a second reinforced mortar layer (16, 17) which is arranged on the second flat side (11.2).

2. Device according to claim 1, **characterised in that** an outer coating (36) can be arranged on the first reinforced mortar layer (12, 13) and the second reinforced mortar layer (16, 17) can be arranged on a wall (39) of the building (3).

3. Device according to claim 1 or 2, **characterised in that** the insulating panel (11) is 2 to 16 cm thick.

4. Device according to claim 1, 2 or 3, **characterised in that** the insulating panel is a plastic hard foam panel (11).

5. Device according to one of the preceding claims, **characterised in that** the first and second grooves are longitudinally running capillary trenches (14.1, ..., 14.n, 15.1, ..., 15.n) spaced apart from each other, on the opposing ends of which a transversely running collecting trench (18, 19) is arranged.

6. Device according to one of the preceding claims, **characterised in that** first and second pipelines are capillary pipelines (83.1, ..., 83.n, 93.1, ..., 93.n) which are connected on their opposing ends respectively by a collecting pipeline (81, 82).

7. Device according to one of the preceding claims, **characterised in that** the collecting pipelines (83, 84) are to be connected to each other.

8. Device according to one of the preceding claims, **characterised in that** the collecting pipelines (83, 84) are to be connected by means of busbar lines (94, 95) through valves (96.1, ..., 96.n) arranged therein.

9. Device according to claim 7, **characterised in that** the valves (96.1, ..., 96.n) are adapted to be controlled and are connected to a control unit (5).

10. Device according to one of the preceding claims, **characterised in that** the controllable busbar lines (94, 95) are connected to a building heat supply system.

11. Device according to one of the preceding claims, **characterised in that** the outer coating is an external plaster layer (36), brickwork or a slate layer.

## Revendications

1. Dispositif de parement de façades de bâtiments, composé de:
- au moins une plaque isolante (11) qui comporte, sur au moins un côté plat (11.1, 11.2), des rainures (14.1, ..., 14.n, 15.1, ..., 15.n, 18, 19) dans lesquelles sont posées des conduites (81, 82, 83.1, ..., 83.n, 84, 85, 93.1, ..., 93.n) à travers lesquelles s'écoule un milieu fluide (88) d'échange de chaleur, et
- un revêtement protecteur (12, 13, 16, 17, 36),
dans lequel
- des premières rainures (14.1, ..., 14.n, 18, 19) dans lesquelles sont posées des premières conduites (81, 82, 83.1, ..., 83.n, 84, 85) sont ménagées dans un premier côté plat (11.1) de la plaque isolante (11), et des deuxièmes rainures (15.1, ..., 15.n) sont ménagées dans un deuxième côté plat (11.2) opposé au premier,
- le revêtement protecteur comprend une première couche de mortier armé (12, 13) qui est agencée sur le premier côté plat (11.1) de la plaque isolante 11, et
- au moins les premières et les deuxièmes conduites (81, 82, 83.1, ..., 83.n, 84, 85, 93.1, ..., 93.n) sont prévues pour être connectées au moins partiellement entre elles,
**caractérisé en ce que**
- des deuxièmes conduites (93.1, ..., 93.n, 84) sont posées dans des deuxièmes rainures et **en ce que**
- le revêtement protecteur comprend une deuxième couche de mortier armé (16, 17) qui est agencée sur le deuxième côté plat (11.2).

2. Dispositif selon la revendication 1, **caractérisé en ce qu'**un revêtement externe (36) peut être agencé sur la première couche de mortier armé (12, 13), et la deuxième couche de mortier armé (16, 17) peut être agencée sur une maçonnerie (39) du bâtiment 3.

3. Dispositif selon la revendication 1 ou 2, **caractérisé en ce que** l'épaisseur de la plaque isolante est de 2 à 16 cm.

4. Dispositif selon la revendication 1, 2 ou 3, **caractérisé en ce que** la plaque isolante est une plaque (11) de mousse rigide de matière plastique.

5. Dispositif selon l'une quelconque des revendications précédentes, **caractérisé en ce que** les premières et deuxièmes rainures sont des tranchées de capillaires (14.1, ..., 14.n, 15.1, ..., 15.n) de tracé longitudinal espacées les unes des autres, et qu'une tranchée (18, 19) de collectrice de tracé transversal est agencée à l'une et l'autre des extrémités opposées de chacune de ces rainures.

6. Dispositif selon l'une quelconque des revendications précédentes, **caractérisé en ce que** les premières et deuxièmes conduites sont des conduites capillaires (83.1, ... 83.n, 93.1, ..., 93.n) qui sont connectées à chacune de leurs extrémités opposées par une conduite collectrice (81, 82).

7. Dispositif selon l'une quelconque des revendications précédentes, **caractérisé en ce que** les conduites collectrices (81, 82) sont prévues pour être connectées entre elles par l'intermédiaire de conduites de raccordement (84, 85).

8. Dispositif selon l'une quelconque des revendications précédentes, **caractérisé en ce que** les conduites de raccordement (84, 85) sont prévues pour être connectées par l'intermédiaire de conduites de rampes collectrices (94, 95) à travers des vannes (96.1, ..., 96.n) agencées dans ces dernières.

9. Dispositif selon la revendication 7, **caractérisé en ce que** les vannes (96.1, ..., 96.n) sont réglables et sont connectées à une unité de réglage (5).

10. Dispositif selon l'une quelconque des revendications précédentes, **caractérisé en ce que** les conduites de rampes collectrices réglables (94, 95) sont connectées à une installation de distribution de chauffage du bâtiment.

11. Dispositif selon l'une quelconque des revendications précédentes, **caractérisé en ce que** le revêtement protecteur est un crépi (36), ou un revêtement de clinker ou d'ardoise.
